# EUROPEAN PATENT APPLICATION

(11) **EP 4 489 187 A1**
(43) Date of publication of application: **08.01.2025**
(21) Application number: 23763359.9
(22) Date of filing: 24.02.2023
(51) Int. Cl.: H01M 50/11, H01M 10/052, H01M 10/0562, H01M 10/0585, H01M 50/119, H01M 50/121, H01M 50/128, H01M 50/133, H01M 50/141

(54) **SOLID-STATE BATTERY PACKAGE**

(30) Priority: 04.03.2022 JP 2022033791
(71) Applicant: Murata Manufacturing Co., Ltd., Nagaokakyo-shi, Kyoto 617-8555 (JP)
(72) Inventor: BABA, Akira, Nagaokakyo-shi, Kyoto 617-8555 (JP); NIWA, Yoshito, Nagaokakyo-shi, Kyoto 617-8555 (JP)
(74) Representative: Reddie & Grose LLP
(86) International application number: PCT/JP2023/006709
(87) International publication number: WO 2023/167100

(57) **Abstract**

Provided is a solid-state battery package including: a substrate; a solid-state battery provided on the substrate; a covering insulating layer provided to cover a main surface and a side surface of the solid-state battery; and an inorganic cover film provided on the covering insulating layer. The inorganic cover film includes a wet-plating composite layer. The wet-plating composite layer includes at least a first wet-plating layer and a second wet-plating layer provided on the first wet-plating layer. The first wet-plating layer has ductility and the second wet-plating layer has alteration resistance.

## Description

### TECHNICAL FIELD

The present disclosure relates to a solid-state battery package. More specifically, the present disclosure relates to a solid-state battery packaged to be adapted for mounting on a substrate.

### BACKGROUND ART

Conventionally, secondary batteries that can be repeatedly charged and discharged have been used for various applications. For example, secondary batteries are used as power sources of electronic devices such as smart phones and notebook computers.

In a secondary battery, a liquid electrolyte is generally used as a medium for ion transfer contributing to charging and discharging. More particularly, a so-called electrolytic solution is used for the secondary battery. However, in such a secondary battery, safety is generally required in terms of preventing leakage of the electrolytic solution. Since an organic solvent or the like used for the electrolytic solution is a flammable substance, safety is required also in that respect.

Thus, solid-state batteries with a solid electrolyte used instead of an electrolytic solution have been studied.

### PRIOR ART DOCUMENT

### PATENT DOCUMENTS

Patent Document 1: Japanese Patent Application Laid-Open No. 2015-220107
Patent Document 2: Japanese Patent Application Laid-Open No. 2007-5279

### SUMMARY OF THE INVENTION

### Problem to be solved by the invention

The solid-state battery may be mounted on a printed wiring board or the like together with other electronic components. In this case, the solid-state battery disposed on a substrate can be covered with a covering member in order to prevent transmission of water vapor. In addition, it has been known that the electrode layers (positive electrode layer/negative electrode layer) of the solid-state battery can expand and contract during charging and discharging. Therefore, depending on the degree of expansion and contraction of the solid-state battery, the covering member may be cracked. In addition, depending on the manufacturing process or the use environment, the covering material itself may be altered, and defects may occur. Such defects associated with cracking and alteration of the covering material can lower the function of preventing water vapor transmission as a whole.

The present disclosure has been made in view of such problems. That is, a main object of the present disclosure is to provide a solid-state battery package capable of further improving water vapor transmission prevention performance.

### Means for solving the problem

To achieve the above object, an embodiment of the present disclosure provides:
a solid-state battery package including:
a substrate;
a solid-state battery provided on the substrate;
a covering insulating layer provided to cover a main surface and a side surface of the solid-state battery; and
an inorganic cover film provided on the covering insulating layer,
wherein the inorganic cover film includes a wet-plating composite layer;
the wet-plating composite layer includes at least a first wet-plating layer and a second wet-plating layer provided on the first wet-plating layer; and
the first wet-plating layer has ductility and the second wet-plating layer has alteration resistance.

In addition, an embodiment of the present disclosure provides:
a solid-state battery package including:
a substrate;
a solid-state battery provided on the substrate;
a covering insulating layer provided to cover a main surface and a side surface of the solid-state battery; and
an inorganic cover film provided on the covering insulating layer,
wherein the inorganic cover film includes a wet-plating composite layer;
the wet-plating composite layer includes at least a first wet-plating layer and a second wet-plating layer provided on the first wet-plating layer;
the first wet-plating layer contains at least one metal selected from a group consisting of Cu, Sn, Zn, Bi, Au, and Ag as a main component;
the second wet-plating layer contains at least one metal selected from a group consisting of Ni, Cr, Pd, Pt, and Zn as a main component; and
the first wet-plating layer and the second wet-plating layer have compositions different from each other.

### Advantageous effect of the invention

The solid-state battery package of an embodiment of the present disclosure has high water vapor transmission prevention performance.

### BRIEF EXPLANATION OF DRAWINGS

FIG. 1 is a sectional view schematically illustrating the internal configuration of a solid-state battery according to an embodiment of the present disclosure.
FIG. 2 is a sectional view schematically illustrating the configuration of a packaged solid-state battery according to an embodiment of the present disclosure.
FIG. 3 is an enlarged sectional view schematically illustrating an inorganic cover film for the portion A of the packaged solid-state battery shown in FIG. 2.
FIG. 4 is an enlarged sectional view schematically illustrating an inorganic cover film of a packaged solid-state battery according to an embodiment of the present disclosure.
FIG. 5 is an enlarged sectional view schematically illustrating an inorganic cover film of a packaged solid-state battery according to an embodiment of the present disclosure.
FIG. 6 is a sectional view schematically illustrating the configuration of a packaged solid-state battery according to an embodiment of the present disclosure.
FIG. 7A is a step sectional view schematically illustrating a process for manufacturing a solid-state battery package according to an embodiment of the present disclosure.
FIG. 7B is a step sectional view schematically illustrating a process for manufacturing a solid-state battery package according to an embodiment of the present disclosure.
FIG. 7C is a step sectional view schematically illustrating a process for manufacturing a solid-state battery package according to an embodiment of the present disclosure.
FIG. 7D is a step sectional view schematically illustrating a process for manufacturing a solid-state battery package according to an embodiment of the present disclosure.
FIG. 7E is a step sectional view schematically illustrating a process for manufacturing a solid-state battery package according to an embodiment of the present disclosure.

### MODE FOR CARRYING OUT THE INVENTION

Hereinafter, a solid-state battery package according to the present disclosure will be described in detail. Although the description will be made with reference to the drawings as necessary, the illustrated contents are only schematically and exemplarily illustrated for the understanding of the present disclosure, and the appearance, the dimensional ratio, or the like may be different from the actual ones.

The term "solid-state battery package" as used herein refers, in a broad sense, to a solid-state battery device configured to protect the solid-state battery from the external environment, and in a narrow sense, to a solid-state battery device that includes a mountable substrate and protects the solid-state battery from the external environment.

The term "sectional view" as used herein is based on a form viewed from a direction substantially perpendicular to the stacking direction in the stacked structure of the solid-state battery (briefly, a form in the case of being cut along a plane parallel to the layer thickness direction). In addition, the term "plan view" or "plan view shape" as used herein is based on a sketch drawing when an object is viewed from an upper side or a lower side along the layer thickness direction (that is, the above stacking direction).

The terms "vertical direction" and "horizontal direction" directly or indirectly as used herein respectively correspond to a vertical direction and a horizontal direction in the drawings. Unless otherwise specified, the same reference numerals or symbols indicate the same members/portions or the same semantic contents. In a preferred embodiment, it can be understood that a downward direction in a vertical direction (that is, a direction in which gravity acts) corresponds to a "downward direction"/a "bottom surface side", and the opposite direction thereof corresponds to an "upward direction"/a "top surface side".

In addition, herein, the phrase of "on" a substrate, a film, a layer, or the like includes not only a case in contact with the upper surface of the substrate, film, or layer, but also a case out of contact with the upper surface of the substrate, film, or layer. More particularly, the phrase of "on" a substrate, a film, or a layer includes a case where a new film or layer is formed above the substrate, film, or layer, and/or a case where another film or layer is interposed over the substrate, film, or layer. In addition, the term "on" does not necessarily mean the upper side in the vertical direction. The term "on" merely indicates a relative positional relationship of a substrate, a film, a layer, or the like.

### [Basic Configuration of Secondary Battery]

The term "secondary battery" as used herein refers to a battery that can be repeatedly charged and discharged. Accordingly, the secondary battery according to the present disclosure is not excessively limited by its name, and for example, a power storage device and the like can also be included in the subject of the present disclosure.

The term "solid-state battery" as used herein refers to, in a broad sense, a battery whose constituent elements are composed of solid and refers to, in a narrow sense, all solid-state battery whose constituent elements (particularly preferably all constituent elements) are composed of solid. In a preferred embodiment, the solid-state battery in the present disclosure is a stacked solid-state battery configured such that layers constituting a battery constituent unit are stacked with each other, and preferably such layers are composed of a sintered body. The term "solid-state battery" encompasses not only a so-called "secondary battery" that can be repeatedly charged and discharged but also a "primary battery" that can only be discharged. According to a preferred embodiment of the present disclosure, the "solid-state battery" is a secondary battery. The term "secondary battery" is not excessively restricted by its name, which can encompass, for example, a power storage device and the like. In the present disclosure, the solid-state battery included in the package can also be referred to as a "solid-state battery element".

Hereinafter, the basic configuration of the solid-state battery according to the present disclosure will be first described. The configuration of the solid-state battery described here is merely an example for understanding the invention, and does not limit the invention.

### [Basic Configuration of Solid-state Battery]

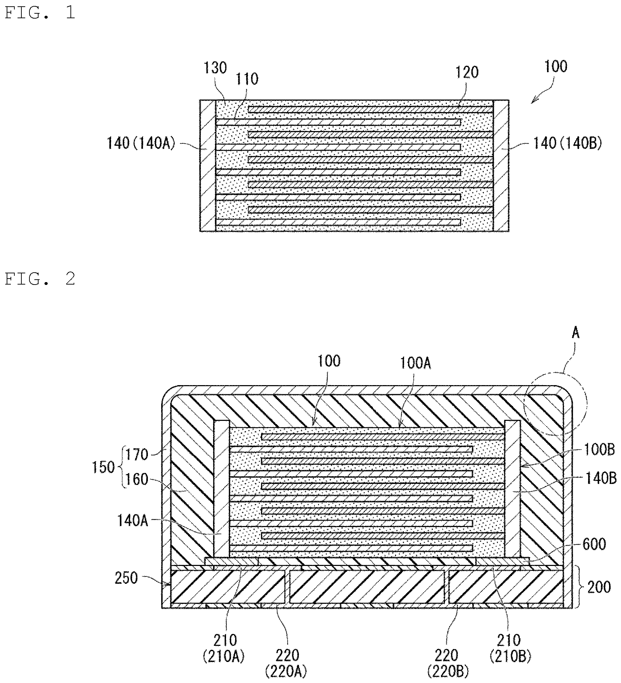

The solid-state battery includes at least electrode layers: a positive electrode and a negative electrode, and a solid electrolyte. Specifically, as illustrated in FIG. 1, a solid-state battery 100 includes a solid-state battery stacked body including battery constituting units composed of a positive electrode layer 110, a negative electrode layer 120, and a solid electrolyte 130 at least interposed between the electrode layers.

For the solid-state battery 100, each layer constituting the solid-state battery may be formed by firing, and the positive electrode layer 110, the negative electrode layer 120, the solid electrolyte 130, and the like may form fired layers. Preferably, the positive electrode layer 110, the negative electrode layer 120, and the solid electrolyte 130 are each fired integrally with each other, and thus, the solid-state battery stacked body preferably forms an integrally fired body.

The positive electrode layer 110 is an electrode layer containing at least a positive electrode active material. The positive electrode layer may further contain a solid electrolyte. In a preferred embodiment, the positive electrode layer is composed of a fired body including at least positive electrode active material particles and solid electrolyte particles. In contrast, the negative electrode layer is an electrode layer containing at least a negative electrode active material. The negative electrode layer may further contain a solid electrolyte. In a preferred embodiment, the negative electrode layer is composed of a sintered body containing at least negative electrode active material particles and solid electrolyte particles.

The positive electrode active material and the negative electrode active material are substances involved in accepting and donating electrons in the solid-state battery. Ions move (conduct) between the positive electrode layer and the negative electrode layer through the solid electrolyte to accept and donate electrons, thereby charging and discharging the battery. Each of the electrode layers, the positive electrode layer and the negative electrode layer, may be a layer capable of occluding and releasing lithium ions or sodium ions. That is, the solid-state battery may be an all-solid-state secondary battery in which lithium ions or sodium ions move between the positive electrode layer and the negative electrode layer with the solid electrolyte interposed therebetween to charge and discharge the battery.

### (Positive Electrode Active Material)

Examples of the positive electrode active material included in the positive electrode layer 110 include at least one selected from the group consisting of lithium-containing phosphate compounds that have a NASICON-type structure, lithium-containing phosphate compounds that have an olivine-type structure, lithium-containing layered oxides, lithium-containing oxides that have a spinel-type structure, and the like. Examples of the lithium-containing phosphate compounds that have a NASICON-type structure include Li₃V₂(PO₄)₃. Examples of the lithium-containing phosphate compounds that have an olivine-type structure include Li₃Fe₂(PO₄)₃, LiFePO₄, and/or LiMnPO₄. Examples of the lithium-containing layered oxides include LiCoO₂ and/or LiC_{01/3}Ni_{1/3}Mn_{1/3}O₂. Examples of the lithium-containing oxides that have a spinel-type structure include LiMn₂O₄ and/or LiNi_{0.5}Mn_{1.5}O₄. The type of the lithium compounds is not particularly limited, and may be regarded as, for example, a lithium-transition metal composite oxide and a lithium-transition metal phosphate compound. The lithium-transition metal composite oxide is a generic term for oxides containing lithium and one or two or more transition metal elements as constituent elements, and the lithium transition metal phosphate compound is a generic term for phosphate compounds containing lithium and one or two or more transition metal elements as constituent elements. The type of transition metal elements is not particularly limited and is, for example, cobalt (Co), nickel (Ni), manganese (Mn), iron (Fe), and the like.

In addition, examples of positive electrode active materials capable of occluding and releasing sodium ions include at least one selected from the group consisting of sodium-containing phosphate compounds that have a NASICON-type structure, sodium-containing phosphate compounds that have an olivine-type structure, sodium-containing layered oxides, sodium-containing oxides that have a spinel-type structure, and the like. For example, in the case of the sodium-containing phosphate compounds, examples thereof include at least one selected from the group consisting of Na₃V₂(PO₄)₃, NaCoFe₂(PO₄)₃, Na₂Ni₂Fe(PO₄)₃, Na₃Fe₂(PO₄)₃ Na₂FeP₂O₇, Na₄Fe₃(PO₄)₂(P₂O₇), and NaFeO₂ as a sodium-containing layered oxide.

In addition, the positive electrode active material may be, for example, an oxide, a disulfide, a chalcogenide, a conductive polymer, or the like. The oxide may be, for example, a titanium oxide, a vanadium oxide, a manganese dioxide, or the like. The disulfide is, for example, a titanium disulfide, a molybdenum sulfide, or the like. The chalcogenide may be, for example, a niobium selenide or the like. The conductive polymer may be, for example, a disulfide, a polypyrrole, a polyaniline, a polythiophene, a poly-para-styrene, a polyacetylene, a polyacene, or the like.

### (Negative Electrode Active Material)

Examples of the negative electrode active material included in the negative electrode layer 120 include at least one selected from the group consisting of oxides containing at least one element selected from the group consisting of titanium (Ti), silicon (Si), tin (Sn), chromium (Cr), iron (Fe), niobium (Nb), and molybdenum (Mo), carbon materials such as graphite, graphite-lithium compounds, lithium alloys, lithium-containing phosphate compounds that have a NASICON-type structure, lithium-containing phosphate compounds that have an olivine-type structure, and lithium-containing oxides that have a spinel-type structure. Examples of the lithium alloys include Li-Al. Examples of the lithium-containing phosphate compounds that have a NASICON-type structure include Li₃V₂(PO₄)₃ and/or LiTi₂(PO₄)₃. Examples of the lithium-containing phosphate compounds that have an olivine-type structure include Li₃Fe₂(PO₄)₃ and/or LiCuPO₄. Examples of the lithium-containing oxide having a spinel-type structure include Li₄Ti₅O₁₂.

In addition, examples of the negative electrode active material capable of occluding and releasing sodium ions include at least one selected from the group consisting of sodium-containing phosphate compounds that have a NASICON-type structure, sodium-containing phosphate compounds that have an olivine-type structure, and sodium-containing oxides that have a spinel-type structure.

Further, in the solid-state battery, the positive electrode layer and the negative electrode layer may be made of the same material, or may be made of materials different from each other.

The positive electrode layer and/or the negative electrode layer may include a conductive material. Examples of the conductive material included in the positive electrode layer and the negative electrode layer include at least one of metal materials such as silver, palladium, gold, platinum, aluminum, copper, and nickel, and carbon.

The positive electrode layer and/or the negative electrode layer may further contain a sintering aid. Examples of the sintering aid include at least one selected from the group consisting of lithium oxide, sodium oxide, potassium oxide, boron oxide, silicon oxide, bismuth oxide, and phosphorus oxide.

The thickness of the positive electrode layer and the negative electrode layer is not particularly limited, but may be, each independently, for example, 2 µm or more and 50 µm or less, particularly 5 µm or more and 30 µm or less.

### (Positive Electrode Current Collecting Layer/Negative Electrode Current Collecting Layer)

Although not an essential element for the electrode layer, the positive electrode layer and the negative electrode layer may respectively include a positive electrode current collecting layer and a negative electrode current collecting layer. The positive electrode current collecting layer and the negative electrode current collecting layer may each have the form of a foil. The positive electrode current collecting layer and the negative electrode current collecting layer may each have, however, the form of a fired body, if more importance is placed on viewpoints such as improving the electron conductivity, reducing the manufacturing cost of the solid-state battery, and/or reducing the internal resistance of the solid-state battery by integral firing. As the positive electrode current collector constituting the positive electrode current collecting layer and the negative electrode current collector constituting the negative electrode current collector, it is preferable to use a material with a high conductivity, and for example, silver, palladium, gold, platinum, aluminum, copper, and/or nickel may be used. The positive electrode current collector and the negative electrode current collector may each have an electrical connection for being electrically connected to the outside, and may be configured to be electrically connectable to the end-face electrode. When the positive electrode current collecting layer and the negative electrode current collecting layer have the form of a fired body, the layers may be composed of a fired body including a conductive material and a sintering aid. The conductive material included in the positive electrode current collecting layer and the negative electrode current collecting layer may be selected from, for example, the same materials as the conductive materials that can be included in the positive electrode layer and the negative electrode layer. The sintering aid included in the positive electrode current collecting layer and the negative electrode current collecting layer may be selected from, for example, the same materials as the sintering aids that can be included in the positive electrode layer/the negative electrode layer. As described above, in the solid-state battery, the positive electrode current collecting layer and the negative electrode current collecting layer are not essential, and a solid-state battery provided without such a positive electrode current collecting layer or a negative electrode current collecting layer is also conceivable. More particularly, the solid-state battery included in the package of the present disclosure may be a solid-state battery without any current collecting layer.

### (Solid Electrolyte)

The solid electrolyte is a material capable of conducting lithium ions or sodium ions. In particular, the solid electrolyte 130 that forms a battery constituent unit in the solid-state battery may form a layer capable of conducting lithium ions between the positive electrode layer 110 and the negative electrode layer 120 (see FIG. 1). The solid electrolyte has only to be provided at least between the positive electrode layer and the negative electrode layer. More particularly, the solid electrolyte may be present around the positive electrode layer and/or the negative electrode layer so as to protrude from between the positive electrode layer and the negative electrode layer. Specific examples of the solid electrolyte include any one, or two or more of a crystalline solid electrolyte, a glass-based solid electrolyte, and a glass ceramic-based solid electrolyte.

Examples of the crystalline solid electrolyte include oxide-based crystal materials and sulfide-based crystal materials. Examples of the oxide-based crystal materials include lithium-containing phosphate compounds that have a NASICON structure, oxides that have a perovskite structure, oxides that have a garnet-type or garnet-type similar structure, and oxide glass ceramic-based lithium ion conductors. Examples of the lithium-containing phosphate compounds that have a NASICON structure include LiₓM_{y}(PO₄)₃ (1 ≤ x ≤ 2, 1 ≤ y ≤ 2, M is at least one selected from the group consisting of titanium (Ti), germanium (Ge), aluminum (Al), gallium (Ga), and zirconium (Zr)). Examples of the lithium-containing phosphate compounds that have a NASICON structure include Li_{1.2}Al_{0.2}Ti_{1.8}(PO₄)₃. Examples of the oxides that have a perovskite structure include La_{0.55}Li_{0.35}TiO₃. Examples of the oxides that have a garnet-type or garnet-type similar structure include Li₇La₃Zr₂O₁₂. In addition, examples of the sulfide-based crystal materials include thio-LISICON, for example, Li_{3.25}Ge_{0.25}P_{0.75}S₄ and Li₁₀GeP₂S₁₂. The crystalline solid electrolyte may contain a polymer material (for example, a polyethylene oxide (PEO)).

Examples of the glass-based solid electrolyte include oxide-based glass materials and sulfide-based glass materials. Examples of the oxide-based glass materials include 50Li₄SiO₄-50Li₃BO₃. In addition, examples of the sulfide-based glass materials include 30Li₂S-26B₂S₃-44LiI, 63Li₂S-36SiS₂-1Li₃PO₄, 57Li₂S-38SiS₂-5Li₄SiO₄, 70Li₂S-30P₂S₅, and 50Li₂S-50GeS₂.

Examples of the glass ceramic-based solid electrolyte include oxide-based glass ceramic materials and sulfide-based glass ceramic materials. As the oxide-based glass ceramic materials, for example, a phosphate compound (LATP) containing lithium, aluminum, and titanium as constituent elements, and a phosphate compound (LAGP) containing lithium, aluminum, and germanium as constituent elements can be used. LATP is, for example, Li_{1.07}Al_{0.69}Ti_{1.46}(PO₄)₃. LAGP is, for example, Li_{1.5}Al_{0.5}Ge_{1.5}(PO₄). In addition, examples of the sulfide-based glass ceramic materials include Li₇P₃S₁₁ and Li_{3.25}P_{0.95}S₄.

In addition, examples of the solid electrolyte capable of conducting sodium ions include sodium-containing phosphate compounds that have a NASICON structure, oxides that have a perovskite structure, and oxides that have a garnet-type or garnet-type similar structure. Examples of the sodium-containing phosphate compounds that have a NASICON structure include NaₓM_{y}(PO₄)₃(1 ≤ x ≤ 2, 1 ≤ y ≤ 2, and M is at least one selected from the group consisting of Ti, Ge, Al, Ga, and Zr).

The solid electrolyte may include a sintering aid. The sintering aid included in the solid electrolyte may be selected from, for example, the same materials as the sintering aids, which can be included in the positive electrode layer/the negative electrode layer.

The thickness of the solid electrolyte is not particularly limited. The thickness of the solid electrolyte located between the positive electrode layer and the negative electrode layer may be, for example, 1 µm or more and 15 µm or less, particularly 1 µm or more and 5 µm or less.

### (End-face Electrode)

The solid-state battery is typically provided with end-face electrodes 140. In particular, the end-face electrode is provided on the side surface of the solid-state battery. More specifically, a positive-electrode-side end-face electrode 140A connected to the positive electrode layer 110 and a negative-electrode-side end-face electrode 140B connected to the negative electrode layer 120 are provided (see FIG. 1). Such end-face electrodes preferably contain a material that is high in conductivity. The specific material of the end-face electrodes is not particularly limited, but examples thereof include at least one selected from the group consisting of silver, gold, platinum, aluminum, copper, tin, and nickel.

### [Basic Configuration of Solid-state Battery Package]

According to the present disclosure, the solid-state battery is packaged. More particularly, the solid-state battery package includes a mountable substrate, and has a configuration in which the solid-state battery is protected from the external environment.

FIG. 2 is a sectional view schematically illustrating the configuration of a packaged solid-state battery according to an embodiment of the present disclosure. As illustrated in FIG. 2, a solid-state battery package 1000 according to an embodiment of the present disclosure includes a substrate 200 so that a solid-state battery 100 is supported. Specifically, the solid-state battery package 1000 includes the mountable substrate 200 and the solid-state battery 100 provided on the substrate 200 and protected from the external environment.

As illustrated in FIG. 2, the substrate 200 has, for example, a larger main surface than the solid-state battery 100. The substrate 200 may be a resin substrate or a ceramic substrate. In short, the substrate 200 may fall in the category such as a printed wiring board, a flexible substrate, an LTCC substrate, or an HTCC substrate. When the substrate 200 is a resin substrate, the substrate 200 may be a substrate composed to include a resin as a base material, for example, a substrate that has a laminated structure including therein a resin layer. The resin material of such a resin layer may be any thermoplastic resin and/or any thermosetting resin. In addition, the resin layer may be formed by impregnating a glass fiber cloth with a resin material such as an epoxy resin, for example.

The substrate may serve as a member for an external terminal of the packaged solid-state battery. More particularly, the substrate can be also considered as a terminal substrate for an external terminal of the solid-state battery. The solid-state battery package provided with such a substrate allows the solid-state battery to be mounted on another secondary substrate such as a printed wiring board, with the substrate interposed therebetween. For example, the solid-state battery can be mounted over a surface with the substrate interposed therebetween, through solder reflow and the like. For the reasons described above, the solid-state battery package according to the present disclosure may be a surface-mount-device (SMD) type battery package.

Such a substrate can be provided to support the solid-state battery, and can thus also be understood as a support substrate. In addition, the substrate may have, because of serving as a terminal substrate, a wiring, an electrode layer, and the like, and in particular, may include an electrode layer that electrically connects upper and lower surfaces or upper and lower surface layers. That is, in a preferred embodiment, the substrate includes wiring or an electrode layer that electrically wires the upper and lower surfaces of the substrate, and is a terminal substrate for an external terminal of the packaged solid-state battery. Such an embodiment enables the wiring of the substrate to be used for extension from the solid-state battery to the external terminal, and thus requires no extension to the outside of the package while packing with the covering material described later, thereby increasing the design freedom of the external terminal.

The substrate 200 according to a preferred embodiment includes electrode layers (upper main surface electrode layers 210 and lower main surface electrode layers 220) that electrically connects the upper and lower main surfaces of the substrate, and serves as a member for an external terminal of the packaged solid-state battery (see FIG. 2). In the solid-state battery package including such a substrate, the electrode layers of the substrate and terminal parts of the solid-state battery are connected to each other. For example, the electrode layers of the substrate and the end-face electrodes of the solid-state battery are electrically connected to each other. For example, the positive-electrode-side end-face electrode 140A of the solid-state battery is electrically connected to the positive-electrode-side electrode layers (210A, 220A) of the substrate. In contrast, the negative-electrode-side end-face electrode 140B of the solid-state battery may be electrically connected to the negative-electrode-side electrode layers (210B, 220B) of the substrate. Thus, the positive-electrode-side and negative-electrode-side electrode layers (in particular, the electrode layers located on the lower side/bottom side of the packaged product, or lands connected thereto) of the substrate are provided respectively as a positive electrode terminal and a negative electrode terminal for the battery package.

For enabling electrical connection between the solid-state battery 100 and the substrate electrode layers 210 of the substrate 200, the end-face electrodes 140 of the solid-state battery 100 and the substrate electrode layers 210 of the substrate 200 can be connected with a bonding member 600 interposed therebetween. The bonding member 600 is responsible for at least electrical connection between the end-face electrodes 140 of the solid-state battery 100 and the substrate 200, and may include, for example, a conductive adhesive. As an example, the bonding member 600 may be made of an epoxy-based conductive adhesive containing a metal filler such as Ag.

Furthermore, according to an embodiment of the present disclosure, not only the substrate 200 but also the solid-state battery package 1000 itself can be configured to prevent water vapor transmission as a whole. For example, the solid-state battery package 1000 according to an embodiment of the present disclosure can be covered with a covering material 150 such that the whole of the solid-state battery 100 provided on the substrate 200 is surrounded. Specifically, it may be packaged so that a main surface 100A and a side surface 100B of the solid-state battery 100 on the substrate 200 is surrounded by the covering material 150. In such a configuration, all surfaces forming the solid-state battery 100 are not exposed to the outside, and water vapor transmission can be prevented.

The term "water vapor" as used herein is not particularly limited to water in a gaseous state, and also encompasses water in a liquid state and the like. More particularly, the term "water vapor" is used to broadly encompass water in a gaseous state, water in a liquid state, and the like, regardless of the physical state. Accordingly, the term "water vapor" can also be referred to as moisture or the like, and in particular, the water in the liquid state can also encompass dew condensation water obtained by condensation of water in a gaseous state. The penetration of water vapor into the solid-state battery causes battery characteristics to be degraded, and thus, the form of the solid-state battery packaged as described above contributes to prolonging the life of the battery characteristics of the solid-state battery.

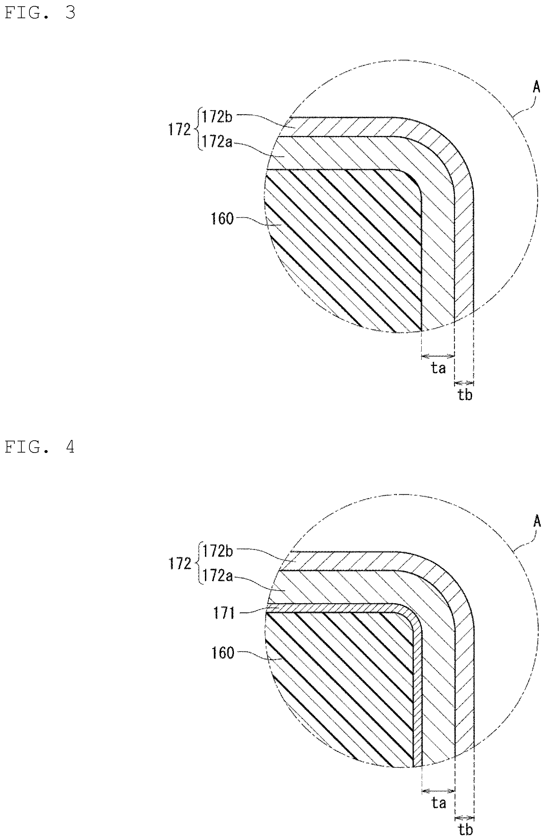

For example, as illustrated in FIG. 2, the covering material 150 can be composed of a covering insulating layer 160 and an inorganic cover film 170. The solid-state battery 100 may have a form covered with the covering insulating layer 160 and inorganic cover film 170 as the covering material 150. The inorganic cover film 170 is provided to cover the covering insulating layer 160. As shown in FIG. 3, the inorganic cover film 170 is positioned on the covering insulating layer 160, and thus has a form of largely enclosing the solid-state battery 100 on the substrate 200 as a whole together with the covering insulating layer 160. Furthermore, the inorganic cover film 170 may have the form of also covering a side surface 250 of the substrate 200.

### [Feature of Solid-state Battery Package according to Present Disclosure]

The inventor of the present application has intensively studied a solution for suitably suppressing cracking of the solid-state battery package 1000, and as a result, has devised the present disclosure having the following technical idea.

Specifically, the present disclosure has a technical idea of "The inorganic cover film 170 has a structure including a plurality of wet-plating layers.". More specifically, the present disclosure has a technical idea of "The covering material has a structure including an inorganic cover film having a plurality of wet-plating layers with properties different from each other.".

For achieving the technical idea mentioned above, the present disclosure has the following technical feature. FIG. 3 is an enlarged sectional view schematically illustrating the inorganic cover film 170 for the portion A of the solid-state battery package 1000 shown in FIG. 2. As illustrated, the inorganic cover film has a structure including a plurality of layers. The term "film" as used herein has a plurality of layers as components. In other words, the term "layer" as used herein may be one of the elements making up a film. The inorganic cover film provided in the solid-state battery package of the present disclosure may have a multilayer structure having at least a wet-plating composite layer 172 including a plurality of wet-plating layers.

The term "wet-plating composite layer" as used herein means a layer composed of at least two wet-plating layers. In particular, since the term "composite layer" as used herein means a laminate including two or more layers, the term "wet-plating composite layer" can also be understood as a laminate formed by laminating a plurality of wet-plating layers. More specifically, as shown in FIG. 3, the wet-plating composite layer 172 may include at least a first wet-plating layer 172a and a second wet-plating layer 172b provided on the first wet-plating layer 172a.

The first wet-plating layer 172a and the second wet-plating layer 172b may have properties different from each other. Specifically, the first wet-plating layer 172a may have ductility, while the second wet-plating layer 172b may have alteration resistance.

For example, the first wet-plating layer 172a may be a plating layer relatively rich in ductility as compared with the second wet-plating layer 172b. Herein, the term "ductility" of the plating layer can also be understood as "flexibility". Therefore, the first wet-plating layer 172a may be a plating layer having flexibility relatively higher than that of the second wet-plating layer 172b. The ductility (or flexibility) of the plating layer can be measured by a known ductility or flexibility test method, and may be evaluated, for example, by a bending test according to ASTM B490-09. In addition, for example, the first wet-plating layer 172a can be a layer capable of changing the volume at a rate equal to or larger than the volume change rate of the solid-state battery due to expansion and contraction when the solid-state battery is used.

The first wet-plating layer 172a having ductility can further improve followability of the plating layer against the volume change of the solid-state battery due to expansion and contraction. Therefore, the stress acting along with such expansion and contraction is further alleviated, and the occurrence of cracks in the wet-plating composite layer is more suitably suppressed. That is, when the first wet-plating layer 172a has ductility, cracking of the wet-plating composite layer due to expansion and contraction of the solid-state battery is more suitably suppressed, and the life of the inorganic cover film can be prolonged.

In addition, since the second wet-plating layer 172b has alteration resistance, the alteration of the plating layer due to an influence from the outside (for example, corrosion by moisture or electrolyte in the atmosphere, oxidation in a high-temperature and high-humidity environment, and/or damage, etc.) can be further reduced. This makes it possible to more suitably suppress the occurrence of defects in the wet-plating composite layer due to alteration of the plating layer. Therefore, the configuration of the inorganic cover film of the present disclosure makes it possible to more suitably suppress the occurrence of cracking and defects in the wet-plating composite layer, so that a solid-state battery package capable of more suitably preventing water vapor transmission can be provided.

Here, the term "alteration" as used herein includes both physical alteration and chemical alteration in a plating layer. More specifically, the term "alteration" refers to a change in appearance and/or properties of a plating layer, for example, due to deformation, discoloration, and/or corrosion of the plating layer. Therefore, the term "alteration resistance" as used herein includes deformation resistance, scratch resistance, discoloration resistance, and/or corrosion resistance. From the viewpoint of prolonging the life of the solid-state battery, it is preferable that the second wet-plating layer is excellent in alteration resistance particularly in a high-temperature and high-humidity environment. For example, it is preferable that no change in appearance is observed when the second wet-plating layer is held for 72 hours in an environment having a temperature of about 85°C and a relative humidity of about 85%.

The inorganic cover film including the wet-plating composite layer preferably functions as a water vapor barrier film. That is, the inorganic cover film covers the top surface and the side surface of the solid-state battery so as to be suitably provided as a barrier that blocks the entry of moisture into the solid-state battery. The term "barrier" as used herein broadly means having such a water vapor transmission-blocking characteristic that water vapor in the external environment does not permeate the inorganic cover film and does not cause degradation in characteristics that is inconvenient to the solid-state battery, and narrowly means having a water vapor transmission rate of less than 1.0 × 10⁻³ g/(m²·Day). Hence, in short, it can be said that the water vapor barrier film preferably has a water vapor transmission rate of 0 or more and less than 1.0 × 10⁻³ g/(m²·Day). The term "water vapor transmission rate" as used herein refers to a transmission rate obtained using the gas transmission rate measuring instrument of model GTms-1 manufactured by ADVANCE RIKO, Inc. under the measurement conditions of 40°C, 90% RH, and a differential pressure of 1 atm.

In a preferred embodiment, the covering insulating layer and the inorganic cover film are integrated with each other. Hence, the inorganic cover film forms a water vapor barrier for the solid-state battery together with the covering insulating layer. In other words, water vapor in the external environment is more suitably prevented from penetrating the solid-state battery by the combination of the integrated covering insulating layer and inorganic cover film.

In an embodiment, the inorganic cover film may further include a dry-plating layer. That is, on the covering insulating layer, the inorganic cover film composed of the dry-plating layer and the wet-plating composite layer may be provided. The dry plating layer may be, for example, a sputtered film. More particularly, the solid-state battery package according to the present disclosure may be provided with a sputtering thin film as a dry-plating film. The sputtered film is a thin film obtained by sputtering. More particularly, a film obtained by sputtering ions onto a target to eject and deposit the atoms thereof can be used as the dry-plating layer.

The sputtered film becomes a relatively dense and/or homogeneous layer while having a significantly thin nanoorder or micro-order form, and thus can contribute to preventing water vapor transmission to the solid-state battery. In addition, the sputtered film is formed by atomic deposition, and can be thus more suitably attached onto the target. Thus, the sputtered film can be more suitably provided as a barrier for preventing water vapor in the external environment from entering the solid-state battery. Thus, the inorganic cover film further includes the sputtered film as the dry-plating layer, thereby the water vapor transmission prevention performance to the solid-state battery can be further improved. The dry-plating layer may be formed by another dry plating, such as a vacuum deposition method or an ion plating method. According to a preferred embodiment, the dry-plating layer may contain, for example, at least one selected from the group consisting of Al (aluminum), Cu (copper), Ti (titanium), and stainless steel (SUS).

As described above, the inorganic cover film may be composed of the dry-plating layer, which is a single layer, and the wet-plating composite layer having a multilayer structure including two or more layers. In the wet-plating composite layer having a multilayer structure, wet-plating layers adjacent to each other may have plating compositions different from each other. In other words, the wet-plating composite layer may have a multilayer structure in which adjacent wet-plating layers having plating compositions different from each other are laminated. That is, the inorganic cover film has a multilayer structure including three or more layers. This means that, on the covering insulating layer, the inorganic cover film in which the dry-plating layer and the wet-plating composite layer are laminated in an arbitrary order can be provided.

In a preferred embodiment, as shown in FIG. 4, the wet-plating composite layer 172 is provided on the dry-plating layer 171. That is, the dry-plating layer 171 may be provided on the covering insulating layer 160 to cover the covering insulating layer 160, and the wet-plating composite layer 172 may be provided thereon. In other words, the dry-plating layer 171 and the wet-plating composite layer 172 may be laminated in this order on the covering insulating layer 160.

When the dry-plating layer is formed by sputtering, the film is formed so as to bite into the covering insulating layer, so that the sputtered film can more suitably adhere to the covering insulating layer. Therefore, the sputtered film can more suitably contribute to water vapor transmission prevention for the solid-state battery together with the covering insulating layer. Furthermore, in sputtering, the sputtered film bites into the covering insulating layer to more suitably adhere to the covering insulating layer. In other words, the sputtered film provided to cover at least the main surface and side surface of the solid-state battery together with the covering insulating layer may be more suitably used as a barrier to prevent water vapor in the external environment from entering the solid-state battery. Further, the dry-plating layer provided inside the wet-plating layer can more suitably prevent the penetration of the plating solution used for forming the wet-plating layer into the solid-state battery. Therefore, by providing the dry-plating layer on the covering insulating layer, a more reliable solid-state battery package can be provided.

The thickness of the dry-plating layer is preferably 1 µm or more and 10 µm or less, more preferably 2 µm or more and 8 µm or less, and still more preferably 3 µm or more and 6 µm or less. The dry-plating layer having a thickness within the above range can more suitably contribute to prevention of water vapor from entering the solid-state battery.

In a preferred embodiment, as shown in FIG. 4, the first wet-plating layer 172a is provided relatively inside the second wet-plating layer 172b. That is, in the wet-plating composite layer, the first wet-plating layer 172a may be located relatively inside, and the second wet-plating layer 172b may be located relatively outside. For example, the second wet-plating layer 172b may be provided to cover the first wet-plating layer 172a. That is, in an embodiment of the present disclosure, the inorganic cover film can be a multilayer inorganic film in which the dry-plating layer on the covering insulating layer, the first wet-plating layer 172a having ductility, and the second wet-plating layer 172b having alteration resistance are laminated in this order. Since the first wet-plating layer 172a having ductility is located inside the second wet-plating layer 172b, the first wet-plating layer functions as a stress-relieving layer that relieves stress caused by expansion and contraction of the solid-state battery. Therefore, stress applied to the second wet-plating layer is further relieved, and cracking of the second wet-plating layer can be more suitably suppressed. Furthermore, the second wet-plating layer 172b having alteration resistance provided outside the first wet-plating layer 172a can reduce the alteration of the plating layer located further inside. Therefore, it is possible to provide a highly reliable solid-state battery package that suppresses occurrence of defects due to alteration of the plating layer and has more excellent water vapor transmission prevention performance.

In a preferred embodiment, as shown in FIG. 4, the second wet-plating layer 172b is the outermost layer of the inorganic cover film. That is, the second wet-plating layer 172b may constitute the outermost layer of the solid-state battery package so as to totally cover the main surface and the side surface of the solid-state battery package. Specifically, the main surface and the side surface, the outside, of the solid-state battery package may be covered with the second wet-plating layer 172b having alteration resistance. This means that the second wet-plating layer 172b is a layer exposed to the external environment. Since the outermost layer of the solid-state battery package is the second wet-plating layer having alteration resistance, the alteration of the covering material due to the influence from the external environment can be suppressed. Therefore, the second wet-plating layer can also be understood as a protective layer that protects the solid-state battery package from the external environment. As described above, the second wet-plating layer protects the wet-plating layer located further inside and the dry-plating layer. Therefore, it is possible to more suitably suppress the alteration of the entire wet-plating composite layer due to the external environment. Therefore, it is possible to provide a solid-state battery package having the above-described structure to more suitably suppress the occurrence of defects of the covering material due to the influence of the external environment and have an improved water vapor transmission prevention performance.

The first wet-plating layer 172a is metal plating or alloy plating having ductility. The plating composition of the first wet-plating layer 172a is not particularly limited as long as it can relieve stress that may occur in expansion and contraction of the solid-state battery, but for example, it is preferable to contain at least one metal selected from the group consisting of Cu (copper), Sn (tin), Zn (zinc), Bi (bismuth), Au (gold), and Ag (silver) as a main component. Furthermore, when it is emphasized that the plating layer does not melt due to heating in the solder reflow for surface mounting of the solid-state battery package, the melting point of the first wet-plating layer is preferably equal to or higher than the temperature of the solder reflow. Therefore, the melting point of the first wet-plating layer may be, for example, 300°C or higher, 350°C or higher, 400°C or higher, or 500°C or higher. When it is emphasized that the first wet-plating layer has high ductility, a high melting point, and further low cost, the first wet-plating layer preferably contains Cu as a main component.

The second wet-plating layer 172b is metal plating or alloy plating having alteration resistance. The plating composition of the second wet-plating layer 172b is not particularly limited as long as a plating layer having alteration resistance can be obtained, but it is preferable to contain, for example, at least one metal selected from the group consisting of Ni (nickel), Cr (chromium), Pd (palladium), Pt (platinum), and Zn as a main component. When emphasis is placed on cost and environmental load, the second wet-plating layer preferably contains Ni as a main component. The plating composition of the first wet-plating layer may be different from the plating composition of the first wet-plating layer. That is, the first wet-plating layer and the second wet-plating layer may have plating compositions different from each other.

The wet-plating layers constituting the wet-plating composite layer may have a thickness different from each other. The first wet-plating layer 172a having ductility preferably has the greatest thickness in the wet-plating composite layer. That is, the first wet-plating layer 172a preferably has a thickness larger than that of the second wet-plating layer 172b. In other words, the second wet-plating layer having alteration resistance may have a thickness smaller than that of the first wet-plating layer. The first wet-plating layer having relatively larger thickness can more suitably relieve stress caused by expansion and contraction of the solid-state battery located more inside, and can further reduce stress transmitted to the plating layer located more outside. Therefore, the first wet-plating layer functions more suitably as a stress-relieving layer, and thereby can more suitably prevent cracking of the outer plating layer. On the other hand, although the second wet-plating layer requires a predetermined thickness for exhibiting alteration resistance, it is desirable that the thickness be relatively small from the viewpoint of making the solid-state battery package compact.

The thickness tₐ of the first wet-plating layer may be, for example, 2 times or more and 50 times or less, 2 times or more and 25 times or less, or 2 times or more and 10 times or less the thickness t_{b} of the second wet-plating layer. When the thickness of the wet-plating layer is within the above range, it is possible to reduce the occurrence of cracking due to expansion and contraction of the solid-state battery, and to suppress the alteration of the plating layer.

The thickness tₐ of the first wet-plating layer having ductility is preferably 10 µm or more and 100 µm or less, more preferably 15 µm or more and 70 µm or less, and particularly preferably 20 µm or more and 40 µm or less. When the thickness tₐ of the first wet-plating layer is within the above range, it is possible to suitably suppress the occurrence of cracking due to expansion and contraction of the solid-state battery.

The thickness t_{b} of the second wet-plating layer having alteration resistance is preferably 1 µm or more and 20 µm or less, more preferably 2 µm or more and 15 µm or less, and particularly preferably 2 µm or more and 10 µm or less. When the thickness of the second wet-plating layer is within the above range, it is possible to suitably reduce alteration of the plating layer, and to suitably suppress the occurrence of defects in the plating composite layer due to the alteration.

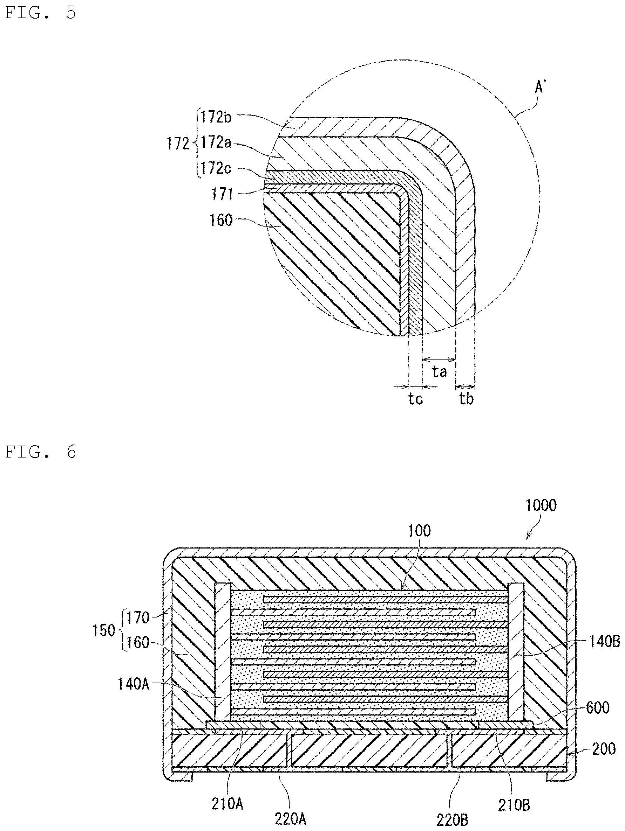

In an embodiment of the present disclosure, the wet-plating composite layer has a multilayer structure including three or more layers. Specifically, as shown in FIG. 5, the first wet-plating layer 172a may be disposed between the second wet-plating layer 172b and a third wet-plating layer 172c. This means that the wet-plating composite layer may have a multilayer structure in which the third wet-plating layer 172c, the first wet-plating layer 172a, and the second wet-plating layer 172b are laminated in this order. In an embodiment, the third wet-plating layer 172c is provided between the dry-plating layer 171 and the first wet-plating layer 172a. That is, the inorganic cover film 170 may have a multilayer structure in which the dry-plating layer 171, the third wet-plating layer 172c, the first wet-plating layer 172a, and the second wet-plating layer 172b are laminated in this order.

The third wet-plating layer 172c may have ductility or alteration resistance. That is, the third wet-plating layer 172c having ductility or alteration resistance may be further disposed inside the first wet-plating layer. When the wet-plating composite layer further includes the third wet-plating layer having ductility or alteration resistance, water vapor transmission into the solid-state battery can be more suitably prevented. In particular, when the third wet-plating layer has ductility, the third wet-plating layer can follow expansion and contraction of the solid-state battery due to charge and discharge. Therefore, the third wet-plating layer can relieve stress applied to the film together with the first wet-plating layer, and can contribute to preventing the inorganic cover film from cracking. When the third wet-plating layer has alteration resistance, the alteration of the plating layer can be more suitably suppressed during the use of the solid-state battery package. Therefore, it is possible to provide a highly reliable solid-state battery package that suppresses occurrence of defects in the inorganic cover film due to alteration of the plating layer and has more excellent water vapor transmission prevention performance.

In a preferred embodiment, the third wet-plating layer 172c has chemical resistance. The term "chemical resistance" as used herein refers to having resistance to a solution containing an alkaline or acidic chemical. More specifically, the term "chemical resistance" refers to a property of having resistance to erosion by a plating solution used to form a wet-plating layer on the third wet-plating. The third wet-plating layer 172c having chemical resistance can suppress erosion of the third wet-plating layer 172c when a plating layer is further formed on the third wet-plating layer 172c. Therefore, for example, when the third wet-plating layer 172c is provided on the dry-plating layer 171 as shown in FIG. 5, the third wet-plating layer protects the dry-plating layer located inside the third wet-plating layer from the plating solution and contributes to more suitably preventing the plating solution from penetrating into the covering insulating layer and the solid-state battery during lamination of the wet-plating layer.

In plating, the plating solution erodes the plated object to sometimes cause defects in the plating layer formed more outside. The defects of the plating layer deteriorate the function of the plating layer as a water vapor barrier film. The inorganic cover film having the third wet-plating layer with chemical resistance can further improve the water vapor transmission prevention performance of the solid-state battery package.

The plating composition of the third wet-plating layer 172c may contain, for example, at least one metal selected from the group consisting of Cu, Sn, Zn, Bi, Au, Ag, Ni, Cr, Pd, Pt, and Co (cobalt) as a main component. When it is emphasized that the third wet-plating layer has chemical resistance, the third wet-plating layer 172c preferably has a plating composition containing, for example, at least one metal selected from the group consisting of Ni, Cr, Pd, Pt, and Co (cobalt) as a main component. The plating composition of the third wet-plating layer 172c may be different from the plating composition of the first wet-plating layer 172a. When it is emphasized that the third wet-plating has adhesion to a plating layer further formed thereon, the third wet-plating layer preferably has a plating composition containing Ni as a main component.

The third wet-plating layer 172c only need to have a thickness necessary to exhibit the effect of chemical resistance. From the viewpoint of suppressing the occurrence of cracking due to expansion and contraction of the solid-state battery, the third wet-plating layer may have a thickness relatively smaller than the thickness tₐ of the first wet-plating layer having ductility. For example, the thickness t_{c} of the third wet-plating layer is preferably 2 µm or more and 20 µm or less, more preferably 2 µm or more and 15 µm or less, and still more preferably 5 µm or more and 10 µm or less. When the third wet-plating layer has a thickness within the above range, the plating solution is more suitably prevented from erosion. Therefore, it is possible to suitably suppress the occurrence of defects in the plating composite layer due to such erosion and to improve the water vapor transmission prevention performance of the solid-state battery package.

Furthermore, as a modification of the solid-state battery of the above-described embodiment, the inorganic cover film may extend from the side surface of the substrate to the main surface of the substrate. Specifically, as shown in FIG. 6, the inorganic cover film may extend to the lower main surface (that is, the bottomside main surface of the substrate) of the substrate. In such a case, the bonding area between the inorganic cover film and the substrate relatively increases, and peeling of the inorganic cover film is further suppressed. Although not illustrated, a metal pad may be provided between the lower main surface of the substrate and the inorganic cover film in order to further strengthen the bonding between the inorganic cover film and the substrate. Such a metal pad may be provided, for example, on the peripheral edge of the lower main surface of the substrate.

The thickness of each layer of the solid-state battery and the substrate may be based on an electron microscopic image. For example, the thickness of each layer constituting the solid-state battery and the substrate may be based on an image obtained by using an ion milling apparatus (model number SU-8040; manufactured by Hitachi High-Tech Corporation). That is, the thickness as used herein may refer to a value calculated from a dimension measured from an image obtained by such a method.

The thickness of each layer of the covering material may be based on an electron microscopic image of the section. For example, the thickness may be based on an image obtained by using an ion milling apparatus (model number SU-8040; manufactured by Hitachi High-Tech Corporation) for the section obtained by cutting the solid-state battery package perpendicularly to the main surface. That is, the thickness of the covering material as used herein may refer to a value calculated from a dimension measured from an image obtained by such a method.

### [Method for Manufacturing Solid-state Battery Package]

The objective product according to the present disclosure can be obtained through a process of preparing a solid-state battery that includes battery constituent units including a positive electrode layer, a negative electrode layer, and a solid electrolyte between the electrodes and next packaging the solid-state battery.

The manufacture of the solid-state battery according to the present disclosure can be roughly divided into: manufacturing a solid-state battery itself corresponding to a stage prior to packaging (hereinafter, also referred to as an "unpackaged battery"); preparing a substrate; and packaging.

### <<Method for Manufacturing Unpackaged battery>>

The unpackaged battery can be manufactured by a printing method such as screen printing, a green sheet method to use a green sheet, or a combined method thereof. More particularly, the unpackaged battery itself may be fabricated in accordance with a conventional method for manufacturing a solid-state battery (thus, for raw materials such as the solid electrolyte, organic binder, solvent, optional additives, positive electrode active material, and negative electrode active material described below, those for use in the manufacture of known solid-state batteries may be used).

Hereinafter, for better understanding of the present disclosure, a manufacturing method will be exemplified and described, but the present disclosure is not limited to this method. In addition, the following time-dependent matters such as the order of descriptions are merely considered for convenience of explanation and the present disclosure is not necessarily bound by the matters.

### (Formation of Stack Block)

· The solid electrolyte, the organic binder, the solvent, and optional additives are mixed to prepare a slurry. Then, from the prepared slurry, sheets including the solid electrolyte are formed by firing.
· The positive electrode active material, the solid electrolyte, the conductive material, the organic binder, the solvent, and optional additives are mixed to prepare a positive electrode paste. Similarly, the negative electrode active material, the solid electrolyte, the conductive material, the organic binder, the solvent, and an optional additive are mixed to prepare a negative electrode paste.
· The positive electrode paste is applied by printing onto the sheet, and a current collecting layer and/or a negative layer are applied by printing, if necessary. Similarly, the negative electrode paste is applied by printing onto the sheet, and a current collecting layer and/or a negative layer are applied by printing, if necessary.
· The sheet with the positive electrode paste applied by printing and the sheet with the negative electrode paste applied by printing are alternately stacked to obtain a stacked body. Further, the outermost layer (the uppermost layer and/or the lowermost layer) of the stacked body may be an electrolyte layer, an insulating layer, or an electrode layer.

### (Formation of Battery Fired Body)

The stacked body is integrated by pressure bonding, and then cut into a predetermined size. The cut stacked body obtained is subjected to degreasing and firing. Thus, a fired stacked body is obtained. The stacked body may be subjected to degreasing and firing before cutting, and then cut.

### (Formation of End-face Electrode)

The end-face electrode on the positive electrode side can be formed by applying a conductive paste to the positive electrode-exposed side surface of the fired stacked body. Similarly, the end-face electrode on the negative electrode side can be formed by applying a conductive paste to the negative electrode-exposed side surface of the fired stacked body. The end-face electrodes on the positive electrode side and the negative electrode side may be provided so as to extend to a main surface of the fired laminate. The component for the end-face electrode can be selected from at least one selected from silver, gold, platinum, aluminum, copper, tin, and nickel.

Further, the end-face electrodes on the positive electrode side and the negative electrode side are not limited to being formed after firing the stacked body, and may be formed before the firing and subjected to simultaneous firing.

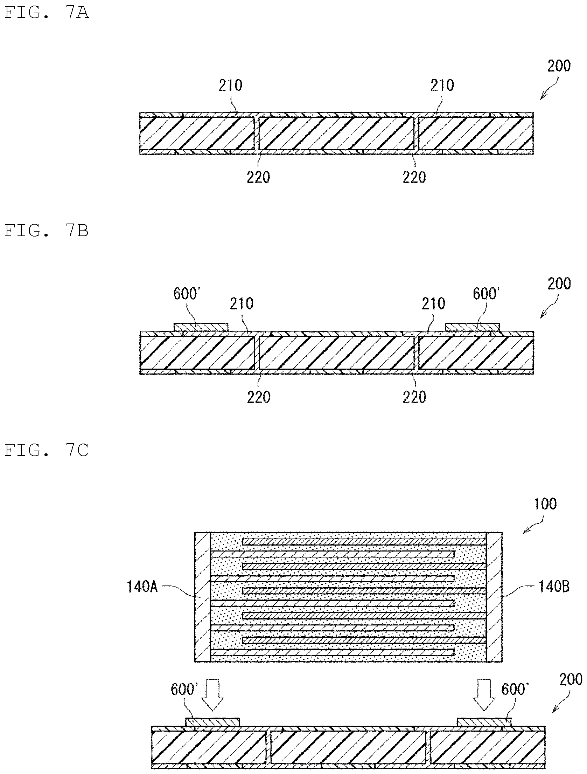

Through the steps described above, a desired unpackaged battery (corresponding to the solid-state battery 100 illustrated in FIG. 7C) can be finally obtained.

### <<Preparation of Substrate>>

In this step, the substrate is prepared.

Although not particularly limited, in the case of using a resin substrate as the substrate, the substrate may be prepared by stacking multiple layers and then performing heating and pressurizing treatments for the layers. For example, a substrate precursor is formed using a resin sheet made by impregnating a fiber cloth as a substrate with a resin raw material. After the formation of the substrate precursor, the substrate precursor is subjected to heating and pressurization with a press machine. In contrast, in the case of using a ceramic substrate as the substrate, for the preparation thereof, for example, multiple green sheets can be subjected to thermal compression bonding to form a green sheet laminate, and the green sheet laminate can be subjected to firing, thereby providing a ceramic substrate. The ceramic substrate can be prepared, for example, in accordance with the preparation of an LTCC substrate. The ceramic substrate may have vias and/or lands. In such a case, for example, holes may be formed for the green sheet with a punch press, a carbon dioxide gas laser, or the like, and filled with a conductive paste material, or a conductive part precursor such as vias or lands may be formed through implementation of a printing method or the like. Further, lands and the like can also be formed after firing the green sheet laminate.

Through the steps as described above, a desired substrate 200 (see FIG. 7A) can be finally obtained.

### <<Packaging>>

Next, packaging is performed using the battery and substrate obtained as mentioned above (see FIGS. 7B to 7E).

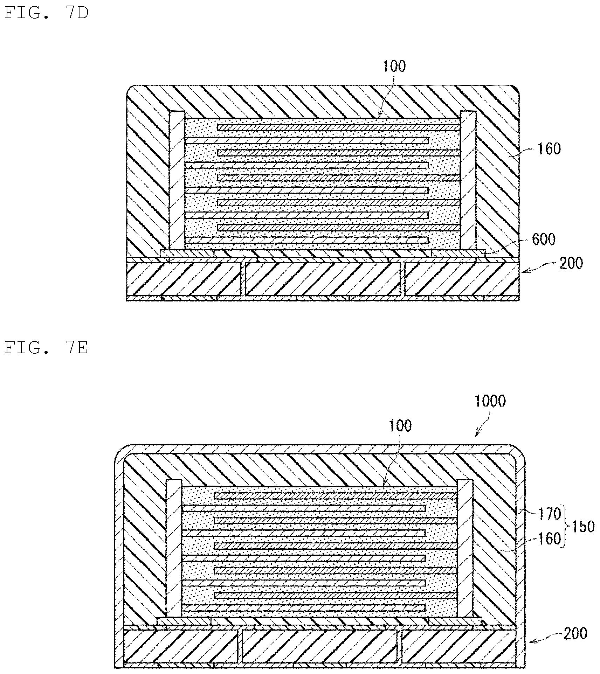

First, the unpackaged battery 100 is placed on the substrate 200 (see FIGS. 7C and 7D). More particularly, the "unpackaged solid-state battery" is placed on the substrate (hereinafter, the battery used for packaging is also simply referred to as a "solid-state battery").

Preferably, the solid-state battery is placed on the substrate so as to electrically connect the conductive parts of the substrate and the end-face electrodes of the solid-state battery to each other. For example, a conductive paste may be provided on the substrate, thereby electrically connect the conductive parts of the substrate and the end-face electrodes of the solid-state battery to each other. More specifically, alignment is performed such that the conductive parts (in particular, lower land/bottom land) on the positive electrode side and negative electrode side of the main surface of the substrate are respectively matched with the end-face electrodes as the positive electrode and negative electrode of the solid-state battery, and the parts and the electrodes are bonded and connected using a conductive paste (for example, Ag conductive paste). More particularly, a precursor for a bonding member that is responsible for electrical connection between the solid-state battery and the substrate may be provided in advance. Such a precursor for a bonding member can be provided by printing a conductive paste that requires no flux cleaning or the like after the formation, such as a nano-paste, an alloy-based paste, or a brazing material, in addition to the Ag conductive paste. Subsequently, the solid-state battery is placed on the substrate such that the end-face electrodes of the solid-state battery and the precursors of the bonding member are brought into contact with each other, and subjected to a heating treatment, thereby forming, from the precursor, the bonding member that contributes to electrical connection between the solid-state battery and the substrate.

Next, the covering material 150 is formed. As the covering material, a covering insulating layer 160 and an inorganic cover layer 170 are provided (see FIG. 7E).

First, the covering insulating layer 160 is formed to cover the solid-state battery 100 on the substrate 200. Hence, a raw material for the covering insulating layer is provided such that the solid-state battery on the substrate is totally covered. When the covering insulating layer is made of a resin material, a resin precursor is provided on the substrate and subjected to curing or the like to mold the covering insulating layer. According to a preferred embodiment, the covering insulating layer may be molded by pressurization with a mold. By way of example only, a covering insulating layer for sealing the solid-state battery on the substrate may be molded through compression molding. In a case of a resin material generally used in molding, the form of the raw material for the covering insulating layer may be granular, and the type thereof may be thermoplastic. Such molding is not limited to die molding, and may be performed through polishing processing, laser processing, and/or chemical treatment.

After the covering insulating layer 160 is formed, the inorganic cover film 170 is formed. Specifically, the inorganic cover film 170 is formed on the "covering precursor in which each solid-state battery 100 is covered with the covering insulating layer 160 on the substrate 200".

The inorganic cover film may be formed by plating the covering precursor. In an embodiment, the wet-plating composite layer is formed on the exposed surfaces of the covering precursor other than the bottom surface (that is, other than the bottom surface of the support substrate), thereby forming the inorganic cover film on the covering precursor. In another embodiment, the wet-plating composite layer is formed such that at least one plating layer of the wet-plating composite layer extends to the bottom surface of the coating precursor.

The wet-plating composite layer may be formed by laminating a plurality of wet-plating layers through performing wet-plating in a predetermined order such that the plating layers adjacent to each other have different properties. For example, in an embodiment of the present disclosure, a plurality of types of wet-plating is sequentially performed on the covering precursor, and the first wet-plating layer and the second wet-plating layer are laminated in this order.

The wet-plating can be performed by, for example, electroplating or electroless plating. When emphasis is placed on the film-forming rate of the plating, the wet-plating layers are more preferably formed by electroplating. Thus, in an embodiment of the present disclosure, the wet-plating layer can be formed by electroplating, and thus, the wet-plating layer can also be referred to as an electroplating layer.

As the metal source of the plating solution used for wet-plating, various forms may be used depending on the type of the dry-plating layer and the plating bath, and the like. The metal source is not particularly limited, but for example, a metal salt of a metal contained in the plating composition, for example, an inorganic acid salt such as a sulfate, a hydrochloride, a pyrophosphate, or a sulfamic acid, and/or an organic acid salt such as a cyanide salt can be used.

For example, the first wet-plating layer having ductility may be formed using a plating solution containing, for example, an inorganic acid salt such as a sulfate, a hydrochloride, a pyrophosphate, or a sulfamic acid and/or an organic acid salt such as a cyanide salt of at least one metal selected from the group consisting of Cu (copper), Sn (tin), Zn (zinc), Bi (bismuth), Au (gold), and Ag (silver). When emphasis is placed on easier management of the plating solution and excellent production efficiency, the first wet-plating layer is more preferably formed using a copper sulfate plating solution.

The second wet-plating layer having alteration resistance may be formed using a plating solution containing, for example, an inorganic acid salt such as a sulfate, a hydrochloride, or a sulfamic acid and/or an organic acid salt such as a cyanide salt of at least one metal selected from the group consisting of Ni (nickel), Cr (chromium), Pd (palladium), Pt (platinum), and Zn. When emphasis is placed on easier management of the plating solution and excellent production efficiency, the second wet-plating layer is more preferably formed by electric nickel plating using a WATT bath, a nickel sulfamate bath, or a wood bath containing nickel sulfate, nickel sulfamate, and/or nickel chloride.

In addition, in the formation of the inorganic cover film, dry-plating and wet-plating may be combined. For example, the covering precursor may be first subjected to dry-plating to form a dry-plating layer. More specifically, the dry-plating layer may be formed by dry-plating on the exposed surfaces of the covering precursor other than the bottom surface (that is, other than the bottom surface of the support substrate). Subsequently, the covering precursor with the dry-plating layer formed thereon may be subjected to multiple types of wet-plating in a predetermined order to form a wet-plating composite layer on the dry-plating layer.

In an embodiment of the present disclosure, the wet-plating layers are formed in the order of the third, first, and second wet-plating layers such that the third wet-plating layer is disposed inside the first wet-plating layer, whereby the wet-plating composite layer is formed on the covering precursor. For example, in an embodiment in which the inorganic cover film includes a dry-plating film, wet-plating may be performed so that the third wet-plating layer, the first wet-plating layer, and the second wet-plating layer are laminated in this order on the covering precursor on which the dry-plating film is formed.

The third wet-plating layer may be formed using a plating solution containing, for example, an inorganic acid salt such as a sulfate, a hydrochloride, or a sulfamic acid and/or an organic acid salt such as a cyanide salt of at least one metal selected from the group consisting of Cu, Sn, Zn, Bi, Au, Ag, Ni, Cr, Pd, Pt, and Co (cobalt). When it is emphasized that erosion of the dry-plating layer is suppressed, the pH of the plating solution used for forming the third wet-plating layer is desirably closer to neutral. For example, the pH of the plating solution is preferably in the range of about 3.0 to about 10.0. For example, the third wet-plating layer may be formed by electric nickel plating using a WATT bath or a nickel sulfamate bath.

In addition, if necessary, various supporting electrolytes and additives (stress-reducing agent, brightener, conductive auxiliary agent, reducing agent, defoaming agent, dispersant, surfactant, and/or the like) can be contained in the plating solution. Examples of plating conditions include current density, temperature, pH, and the like, and these conditions can be arbitrarily set. When electroplating is used to form a plating layer, the plating means may be direct-current plating or pulse plating.

Through the steps described above, it is possible to obtain a packaged article in which the solid-state battery on the substrate is totally covered with the covering insulating layer and the inorganic cover film. More particularly, the "solid-state battery package" according to the present disclosure can be finally obtained.

In the above description, a form in which the covering material 150 covers the solid-state battery 100 has been mentioned, but the present disclosure may have a form in which the solid-state battery 100 is largely covered with the covering material 150. For example, the inorganic cover layer 170 provided on the covering insulating layer 160 that covers the solid-state battery 100 on the substrate 200 may extend to the lower main surface of the substrate 200 (see FIG. 6). That is, as the covering material 150, the inorganic cover layer 170 on the covering insulating layer 160 may extend to the side surface of the substrate 200, and may extend to the lower main surface (particularly, the peripheral edge portion thereof) of the substrate 200 beyond the side of the substrate 200. In such a form, a solid-state battery package may be provided in which moisture transmission (moisture transmission from the outside to the solid-state battery stacked body) is more suitably prevented.

Preferably, the substrate may have a water vapor barrier layer having been formed thereon. More particularly, a water vapor barrier may be formed on the substrate prior to the packaging, in which the substrate and the solid-state battery are combined.

The water vapor barrier layer is not particularly limited as long as a desired barrier layer can be formed. For example, in the case of "a water vapor barrier layer having Si-O bonds and Si-N bonds", the water vapor barrier layer is preferably formed through application of a liquid raw material and ultraviolet irradiation. More particularly, the water vapor barrier layer is formed under a relatively low temperature condition (for example, a temperature condition of about 100°C) without using any vapor-phase deposition method such as CVD or PVD.

Specifically, a raw material containing, for example, silazane is prepared as a liquid raw material, and the liquid raw material is applied to the substrate by spin coating, spray coating, or the like, and dried to form a barrier precursor. Then, the barrier precursor can be subjected to UV irradiation in an environmental atmosphere containing nitrogen, thereby providing the "water vapor barrier layer having Si-O bonds and Si-N bonds".

In order that the water vapor barrier layer is not present at the bonding site between the conductive portion of the substrate and the end-face electrode of the solid-state battery, it is preferable to locally remove the barrier layer at the site. Alternatively, a mask may be used so that the water vapor barrier layer is not formed at the bonding site. More particularly, the water vapor barrier layer may be totally formed with a mask applied to the region for the bonding site, and then the mask may be removed.

### EXAMPLES

Verification tests were performed in accordance with the present disclosure. The structure of FIG. 2 was employed for the structure of the solid-state battery package.

Specifically, solid-state battery packages having an inorganic cover film of each of Comparative Examples 1 and 2 and Examples 1 to 4 shown in Table 1 below were produced. A Cu-dry-plating layer having a thickness of 5 µm was formed on the covering insulating layer and the side surface of the substrate using a sputtering method. Then, various kinds of plating were performed to laminate the third wet-plating layer, the first wet-plating layer, and the second wet-plating layer described in Table 1 in this order to form a wet-plating composite layer. The wet-plating was totally performed by electroplating to obtain a wet-plating layer having the thickness described in Table 1. In the table, "Cu-plating" refers to a wet-plating layer obtained by copper sulfate plating, and "Ni-plating" refers to a wet-plating layer obtained by electric nickel plating using a WATT bath.

**[Table 1]**

| | Type of plating (Thickness) | | |
|---|---|---|---|
| | First wet-plating layer | Second wet-plating layer | Third wet-plating layer |
| Comparative Example 1 | - | Ni-plating (20 µm) | - |
| Comparative Example 2 | Cu-plating (30 µm) | - | - |
| Example 1 | Cu-plating (10 µm) | Ni-plating (6 µm) | - |
| Example 2 | Cu-plating (30 µm) | Ni-plating (2 µm) | Ni-plating (2 µm) |
| Example 3 | Cu-plating (100 µm) | Ni-plating (20 µm) | Ni-plating (2 µm) |
| Example 4 | Cu-plating (30 µm) | Ni-plating (6 µm) | Ni-plating (6 µm) |
| Example 5 | Cu-plating (6 µm) | Ni-plating (20 µm) | - |

The thickness of each plating layer described in Table 1 was determined from the section treated using an ion milling apparatus (model number SU-8040; manufactured by Hitachi High-Tech Corporation).

The solid-state battery package of each of Comparative Examples and Examples was charged and discharged 30 times, and the degree of cracks in the wet-plating layer as the outermost layer was checked. A wet-plating layer as the outermost layer having only some minor cracks is also employed in Examples. The thickness of the battery cell was 3.76 mm in the discharged state, and 3.84 mm in the fully charged state.

Whether there were cracks was determined by microscopic observation at a magnification of 100 times.

In addition, the solid-state battery package of each of Comparative Examples and Examples was allowed to stand for 72 hours under the conditions of a temperature of 85°C and a humidity of 85%, and then whether the wet-plating layer as the outermost layer changed in its appearance (that is, whether there were altered portions) was checked.

In the measurement on whether alteration occurred, a microscope at a magnification of 10 times was used. When occurrence of discoloration, rust, and/or corrosion was confirmed in the wet-plating layer as the outermost layer as compared with that before the test, it was determined that alteration was "present". The results of measuring whether there were cracks and alteration for the solid-state battery packages in Comparative Examples and Examples described in Table 1 are shown in Table 2.

**[Table 2]**

| | Degree of cracks | Whether alteration occurred |
|---|---|---|
| Comparative Example 1 | Present | Absent |
| Comparative Example 2 | Absent | Present |
| Example 1 | Absent | Absent |
| Example 2 | Absent | Absent |
| Example 3 | Absent | Absent |
| Example 4 | Absent | Absent |
| Example 5 | Few (Only some minor cracks) | Absent |

According to the above results, in the solid-state battery package of Comparative Example 1, which has Ni-plating having alteration resistance, no alteration was observed under high-temperature and high-humidity conditions, but generation of cracks was confirmed on the surface after charging and discharging the solid-state battery. In addition, in the solid-state battery package of Comparative Example 2, which has Cu-plating with ductility, the occurrence of cracks was not observed, but discoloration was confirmed under high-temperature and high-humidity conditions. On the other hand, in the solid-state battery package of Example 5, which has a plurality of wet-plating layers, as compared with the solid-state battery packages of Comparative Examples 1 and 2, in each of which the wet-plating layer was a single layer, results were obtained in which the occurrence of cracks in the outermost layer of the inorganic cover film and alteration under high-temperature and high-humidity conditions were more suitably reduced. That is, since the inorganic cover film has at least the first wet-plating layer having ductility and the second wet-plating layer having alteration resistance, the occurrence of cracks in the inorganic cover film or defects due to alteration is reduced. Therefore, the present disclosure provides a more reliable solid-state battery package having high water vapor transmission prevention performance.

Furthermore, in the solid-state battery package of each of Examples 1 to 4, in which the Cu-plating layer having ductility was provided in a thickness of 10 µm or more in the inorganic cover film, the result that the generation of cracks in the inorganic cover film was more suitably suppressed was obtained, as compared with the solid-state battery package of Example 5, in which the inorganic cover film having a 6 µm Cu-plating layer was provided. Therefore, a thicker plating layer having ductility can more suitably suppress the occurrence of cracks in the inorganic cover film.

In the solid-state battery packages of Comparative Example 2 and Example 1, each of which has no third wet-plating layer on the dry copper-plating layer, it was observed that the plating solution eroded into the dry-plating layer during the formation of the first wet-plating layer. On the other hand, in the solid-state battery packages of Comparative Example 1 and Examples 2 to 5, in each of which the Ni-plating layer was formed on the dry-plating layer, it was not observed that the dry-plating layer was eroded (for example, reduced in size). From the above, it can be understood that the third wet-plating layer contributes to protection of the dry-plating layer against a plating solution used to form the first wet-plating layer. That is, since the inorganic cover film further includes the third wet-plating layer, the erosion of the plated object is suppressed during the formation of the outer wet-plating layer. Therefore, the solid-state battery package of the present disclosure further having the third wet-plating layer in addition to the first and second wet-plating layers is used to suitably suppress water vapor transmission.

Although the embodiments of the present disclosure have been described above, typical examples have been only illustrated. Those skilled in the art will easily understand that the present disclosure is not limited thereto, and various embodiments are conceivable without changing the scope of the present disclosure.

### INDUSTRIAL APPLICABILITY

The solid-state battery package according to the present disclosure can be used in various fields where battery use or power storage can be assumed. By way of example only, the solid-state battery package according to the present disclosure can be used in the fields of electricity, information, and communication in which mobile devices and the like are used (such as the field of electric/electronic devices and the field of mobile devices including small electronic devices such as mobile phones, smartphones, notebook computers and digital cameras, activity trackers, arm computers, electronic paper, RFID tags, card-type electronic money, and smartwatches), home and small industrial applications (such as the fields of power tools, golf carts, and home, nursing, and industrial robots), large industrial applications (such as the fields of forklifts, elevators, and harbor cranes), the field of transportation systems (such as the fields of hybrid vehicles, electric vehicles, buses, trains, power-assisted bicycles, and electric two-wheeled vehicles), power system applications (such as the fields of various types of power generation, road conditioners, smart grids, and home energy storage systems), medical applications (field of medical equipment such as earphone hearing aids), pharmaceutical applications (fields such as dosage management systems), IoT fields, space and deep sea applications (such as the fields of space probes and submersibles), and the like.

### DESCRIPTION OF REFERENCE SYMBOLS

100: Solid-state battery
100A: Main surface of solid-state battery
100B: Side surface of solid-state battery
110: Positive electrode layer
120: Negative electrode layer
130: Solid electrolyte or solid electrolyte layer
140: End-face electrode
140A: End-face electrode on positive electrode side
140B: End-face electrode on negative electrode side
150: Covering material
160: Covering insulating layer
170: Inorganic cover layer
171: Dry-plating layer
172: Wet-plating composite layer
172a: First wet-plating layer
172b: Second wet-plating layer
172c: Third wet-plating layer
200: Substrate
210: Substrate electrode layer (substrate upper side)
210A: Positive-electrode-side substrate electrode layer
210B: Negative-electrode-side substrate electrode layer
220: Substrate electrode layer on mounting side (substrate lower side)
220A: Positive-electrode-side substrate electrode layer on mounting side
220B: Negative-electrode-side substrate electrode layer on mounting side
250: Side surface of substrate
600: Bonding member
600': Bonding member precursor
1000: Solid-state battery package
tₐ: Thickness of first wet-plating layer
t_{b}: Thickness of second wet-plating layer
t_{c}: Thickness of third wet-plating layer

## Claims

1. A solid-state battery package comprising:
a substrate;
a solid-state battery provided on the substrate;
a covering insulating layer provided to cover a main surface and a side surface of the solid-state battery; and
an inorganic cover film provided on the covering insulating layer,
wherein the inorganic cover film includes a wet-plating composite layer,
the wet-plating composite layer includes at least a first wet-plating layer and a second wet-plating layer provided on the first wet-plating layer, and
the first wet-plating layer has ductility and the second wet-plating layer has alteration resistance.

2. The solid-state battery package according to claim 1, wherein the inorganic cover film further has a dry-plating layer.

3. The solid-state battery package according to claim 2, wherein the dry-plating layer is provided on the covering insulating layer.

4. The solid-state battery package according to any one of claims 1 to 3, wherein the wet-plating composite layer has a structure including two or more layers.

5. The solid-state battery package according to claim 4, wherein, in the structure including two or more layers, wet-plating layers adjacent to each other have compositions different from each other.

6. The solid-state battery package according to any one of claims 1 to 5, wherein the first wet-plating layer is located relatively inside, and the second wet-plating layer is located relatively outside.

7. The solid-state battery package according to any one of claims 1 to 6,
wherein the first wet-plating layer is disposed between the second wet-plating layer and a third wet-plating layer, and
the third wet-plating layer is a plating layer having ductility or a plating layer having alteration resistance.

8. The solid-state battery package according to claim 7 depending from claim 2,
wherein the inorganic cover film further has a dry-plating layer,
the third wet-plating layer is provided on the dry-plating layer, and
the third wet-plating layer is a plating layer having chemical resistance.

9. The solid-state battery package according to any one of claims 1 to 8, wherein the second wet-plating layer is an outermost layer of the inorganic cover film.

10. The solid-state battery package according to any one of claims 1 to 9, wherein the second wet-plating layer is a layer exposed to an external environment.

11. The solid-state battery package according to any one of claims 1 to 10, wherein the inorganic cover film has a multilayer structure including three or more layers.

12. A solid-state battery package comprising:
a substrate;
a solid-state battery provided on the substrate;
a covering insulating layer provided to cover a main surface and a side surface of the solid-state battery; and
an inorganic cover film provided on the covering insulating layer,
wherein the inorganic cover film includes a wet-plating composite layer,
the wet-plating composite layer includes at least a first wet-plating layer and a second wet-plating layer provided on the first wet-plating layer,
the first wet-plating layer contains at least one metal selected from a group consisting of Cu, Sn, Zn, Bi, Au, and Ag as a main component,
the second wet-plating layer contains at least one metal selected from a group consisting of Ni, Cr, Pd, Pt, and Zn as a main component, and
the first wet-plating layer and the second wet-plating layer have compositions different from each other.

13. The solid-state battery package according to claim 12, wherein the inorganic cover film further has a dry-plating layer.

14. The solid-state battery package according to claim 12 or 13, wherein the first wet-plating layer has Cu as a main component.

15. The solid-state battery package according to any one of claims 11 to 14, wherein the second wet-plating layer has Ni as a main component.

16. The solid-state battery package according to claim 14 or 15 depending from claim 12,
wherein the inorganic cover film further has a dry-plating layer,
the wet-plating composite layer further has a third wet-plating layer between the dry-plating layer and the first wet-plating layer, and
the third wet-plating layer contains at least one metal selected from a group consisting of Ni, Cr, Pd, Pt, and Co as a main component.

17. The solid-state battery package according to claim 16, wherein the third wet-plating layer has Ni as a main component.

18. The solid-state battery package according to any one of claims 1 to 17, wherein, in the wet-plating composite layer, the first wet-plating layer is thickest.

19. The solid-state battery package according to any one of claims 1 to 18, wherein a thickness of the first wet-plating layer is greater than a thickness of the second wet-plating layer.

20. The solid-state battery package according to any one of claims 1 to 19, wherein a thickness of the first wet-plating layer is 2 times or more and 5 times or less a thickness of the second wet-plating layer.

21. The solid-state battery package according to any one of claims 1 to 20, wherein a thickness of the first wet-plating layer is 10 µm or more and 100 µm or less.

22. The solid-state battery package according to any one of claims 1 to 21, wherein a thickness of the second wet-plating layer is 2 µm or more and 20 µm or less.

23. The solid-state battery package according to any one of claims 8 to 11 depending from claim 7 and claims 17 to 22 depending from claim 16, wherein the third wet-plating layer has a thickness of 2 µm or more and 20 µm or less.
